# EUROPEAN PATENT APPLICATION

(11) **EP 1 898 317 A1**
(43) Date of publication of application: **12.03.2008**
(21) Application number: 06018600.4
(22) Date of filing: 05.09.2006
(51) Int. Cl.: G06F 17/30

(54) **Method and apparatus for automatically ranking of nodes within a relationship network**

(71) Applicant: SIEMENS AKTIENGESELLSCHAFT, 80333 München (DE)
(72) Inventor: Bender, Ekkehard, 85551 Kirchheim (DE); Ziegler, Cai-Nicolas, Dr., 80337 München (DE)

(57) **Abstract**

A method for automatically ranking of nodes within a relationship network which comply with a profile having criteria referring to taxonomic classification schemes, wherein the method comprises the following steps: transmitting of a search request including said profile from a searching node of said relationship network via a physical network to a server, matching the transmitted profile with stored profiles of nodes of said relationship network by said server, calculating relationship network distances between the matching nodes and the searching node by said server, and ranking the matching nodes depending on the calculated respective relationship network distances.

## Description

### BACKGROUND OF THE INVENTION

The invention relates to a method and apparatus for automatically ranking of nodes within a relationship network and, in particular, finding a fitting expert node fulfilling minimal criteria within the surrounding of a searching node within a relationship network.

In many situations, a node within a network has to look for another node in the same network fulfilling a predefined profile of features specified by the searching node. If, for instance, a person A looks for an expert for installing a network and he does not know such a person, he normally turns to friends and colleagues and asks them whether they can recommend such a person which has the necessary qualifications.

If the asked persons do not know such a person, they might ask friends or colleagues of their own, whether they know such a person having the necessary qualifications. Accordingly, in normal circumstances, the search for an expert fulfilling the predetermined profile is not done efficiently, but more or less at random.

In conventional searching machines which are used, for instance, in the Internet, a person searching for an expert can input keywords describing the desired expert profile. The keyword-based approach does not allow a specific search for an expert, such as an expert X having three years of job experience in a data warehousing project with the function as a project leader. Furthermore, conventional search engines do not take into account the relation or links between the nodes or persons, such as in a social network. Social paths between the searching person and the expert are hidden by a conventional search through a search machine. In particular, it is not possible, to get recommendations for a found node or expert by intermediary persons along the link path or social path between both nodes.

### BRIEF SUMMARY OF THE INVENTION

Accordingly, it is an object of the present invention to provide a method and an apparatus which makes it possible that a searching node can find a node within a relationship network of the searching node which complies with a desired profile.

The invention provides a method for automatically ranking of nodes within a relationship network which complies with a profile having criteria referring to taxonomic classification schemes, wherein the method comprises the following steps:
- transmitting of a search request including said profile from a searching node of said relationship network via a physical network to a server;
- matching the transmitted profile with stored profiles of nodes of said relationship network by said server;
- calculating relationship network distances between the matching nodes and the searching node by said server; and
- ranking the matching nodes depending on the calculated respective relationship network distances.

In a preferred embodiment of the method according to the present invention, matching nodes having a low calculated relationship network distance to the searching node are ranked higher than matching nodes having a high calculated relationship network distance.

In an embodiment of the method according to the present invention, the ranked matching nodes are displayed at the searching node according to their ranking order.

In a preferred embodiment of the method according to the present invention, the matching of the node profiles is performed by automatic taxonomic interference.

In an embodiment of the method according to the present invention, a matching degree value is calculated for each matching node during the matching of the transmitted profile with the respective profile of a node of said relationship network, wherein said calculated matching degree value indicates a degree of matching between both profiles.

In one embodiment of the method according to the present invention, the ranking is performed by calculating a ranking function depending on the matching degree value as a relationship network distance for all matching nodes.

In one embodiment of the method according to the present invention, further, a reputation value is calculated for each matching node of said relationship network depending on a number of neighboring nodes to which said matching node is connected within the relationship network and/or depending on the reputation values of his neighboring nodes.

In one embodiment of the method according to the present invention, the ranking of the matching nodes is performed depending also on the reputation value of said matching node.

In a possible embodiment of the method according to the present invention, the relationship path between a matching node and a searching node in the relationship network is displayed at the searching node.

In an embodiment of the method according to the present invention, the relationship path comprises all intermediary nodes between the searching node and the respective matching node within said relationship network.

In a possible embodiment of the method according to the present invention, the relationship network is stored in a first database connected to said server.

In an embodiment of the method according to the present invention, the profiles of all nodes of the relationship network are stored in a second database connected to said server.

In an embodiment of the method according to the present invention, the searching node sends an inquiry to at least one intermediary node of said relationship path to verify the profile of the respective matching node.

In one embodiment of the method according to the present invention, the searching node establishes a communication link to the respective matching node via the intermediary nodes of the relationship path.

In one embodiment of the method according to the present invention, each node of said relationship network is formed by a computer of a user.

In one embodiment of the method according to the present invention, each computer is connected via said physical network to said server.

In one embodiment of the method according to the present invention, the physical network is formed by the Internet.

In one embodiment of the method according to the present invention, the profiles comprise minimal criteria to be met by a matching node.

In one embodiment of the method according to the present invention, each user is an expert having an expert profile.

In one embodiment of the method according to the present invention, the relationship network is formed by a social network.

In an alternative embodiment, the relationship network is formed by a physical network.

The invention further provides a server for automatically ranking of nodes within a relationship network which complies with a profile having criteria referring to taxonomic classification schemes,
wherein the server upon reception of a search request from a searching node of a relationship network which includes said profile matches the received profile with stored profiles of other nodes of said relationship network and calculates the relationship network distances between the matching nodes and the searching nodes, wherein said server ranks the matching nodes depending on the calculated respective relationship network distances.

The invention further provides a computer system for ranking nodes within a relationship network which complies with a profile having criteria referring to taxonomic classification schemes, wherein the computer system comprises a data network to which a plurality of clients and at least one server is connected,
wherein the server has a first database for storing a relationship network indicating relations between said clients and the second database for storing profiles of the clients,
wherein the server upon reception of a search request including a requested profile from a client via the data network matches the requested profile with profiles of all clients stored in the second database and calculates a relationship network distance of all matching clients depending on the data stored in the first database,
wherein said server ranks the matching client depending on the calculated respective relationship network distances.

### BRIEF DESCRIPTION OF THE DRAWINGS

The invention will be described in greater detail hereinafter by way of non-limiting examples with respect to the embodiments as shown in the drawings.
Figure 1 shows a possible embodiment for a computer system for ranking of nodes within a relationship network according to the present invention;
Figure 2 shows an example of a relationship network to which the method for automatically ranking of nodes according to the present invention is applied;
Figure 3 shows a further example of a relationship network to which the method for automatically ranking of nodes according to the present invention is applied.
Figures 4A, 4B show an example of a ranking list of matching nodes generated by the method for automatically ranking of nodes within a relationship network according to one embodiment of the present invention and a corresponding generated ranking list;
Figure 5 shows an example for taxonomic classification used by the method according to the present invention.

### DETAILED DESCRIPTION OF THE FIGURES

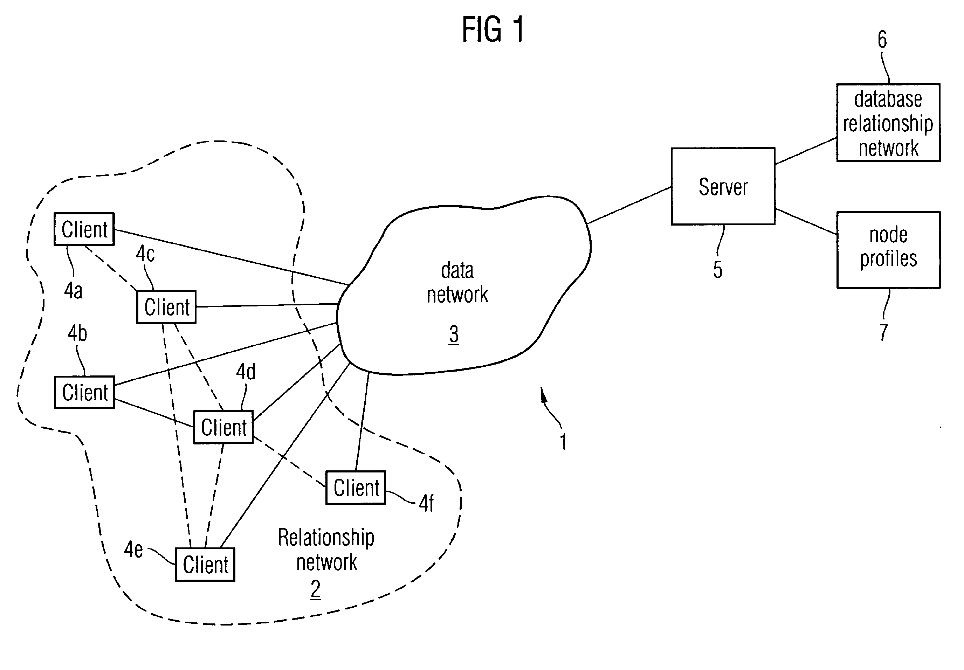

Figure 1 shows a possible embodiment of a computer system 1 for ranking of nodes within a relationship network 2 according to the present invention.

The computer system 1 comprises a data network 3 to which a plurality of client computers 4 are connected. Accordingly, the client computers 4 are connected to a physical data network 3, such as the Internet. The data network 3 can be formed by any network, for example, by an internal network of an enterprise. The user of the different client computers 4 are part of the relationship network 2. For example, all users of said enterprise participate in a social network within the enterprise. Alternatively, the relationship network 2 is formed by another physical network, such as an enterprise data network. The computer system 1 further comprises at least one server 5 connected to the data network 3. The server 5 is further connected to a first database 6 for storing information data about the relationship network 2 indicating social or physical relations or links between the users of the client computers 4. Further, a second database 7 is connected to the server 5, wherein the second database stores profiles of the users with the respective client computers 4. The server 5 upon reception of a search request including a requested profile from a client computer 4 received via the data network 3 matches the requested profile with the profiles of all clients or users stored in the second database 7 and then calculates the relationship network distance d of all matching clients depending on the data stored in the first database 6. The server 5 ranks the matching clients depending on the calculated respective relationship network distance d.

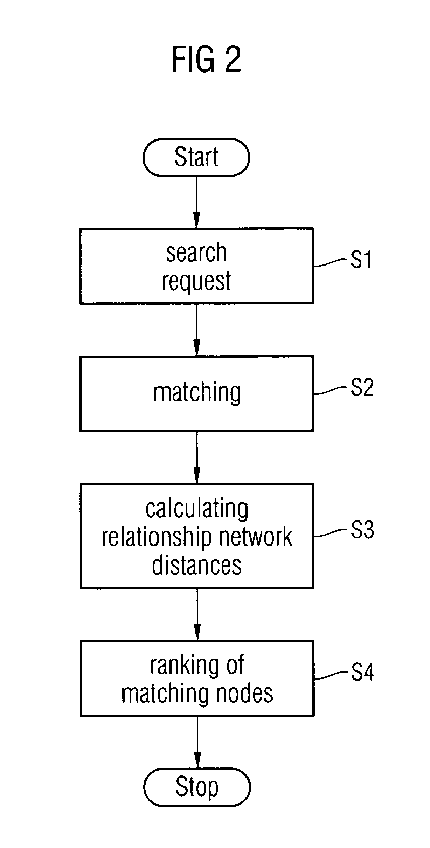

Figure 2 shows a flowchart of a possible embodiment of the method for automatically ranking of nodes within the relationship network 2 according to the present invention.

The method according to the present invention performs a ranking of nodes within the relationship network 2, wherein the nodes comply with a profile having criteria referring to a taxonomic classification scheme.

A searching node within the relationship network 2 looking for another node having a predetermined profile transmits in a first step S1 a search request including the desired profile via a physical data network 3 to the server 5 as shown in figure 1.

The server 5 performs a matching of the received profile with the profiles of all nodes within the relationship network 2 stored in the database 7.

In a step S3, the server 5 calculates the relationship network respective distance d between all matching nodes and the searching node.

Finally, the server 5 performs a ranking of the matching nodes depending on the calculated respective relationship network distances d in step S4.

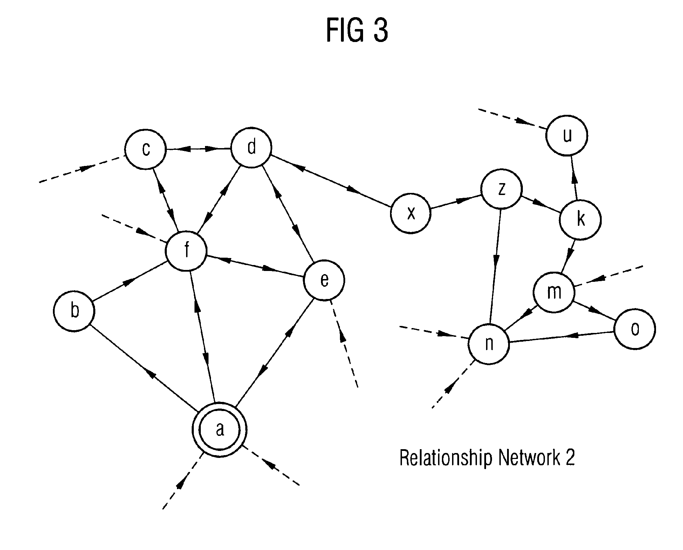

Figure 3 shows an example of a relationship network 2. The relationship network 2 as shown in figure 3 comprises a node or person a having neighboring nodes b, f and e which in turn have neighboring nodes c, d. In the example of figure 3, the contact between node a and node f is already established forming a bidirectional relationship or link between both nodes. In contrast, there is no bidirectional relationship between nodes a and b, i. e. node a considers node b as a known person to him, and person b has not yet confirmed the relationship to node a.

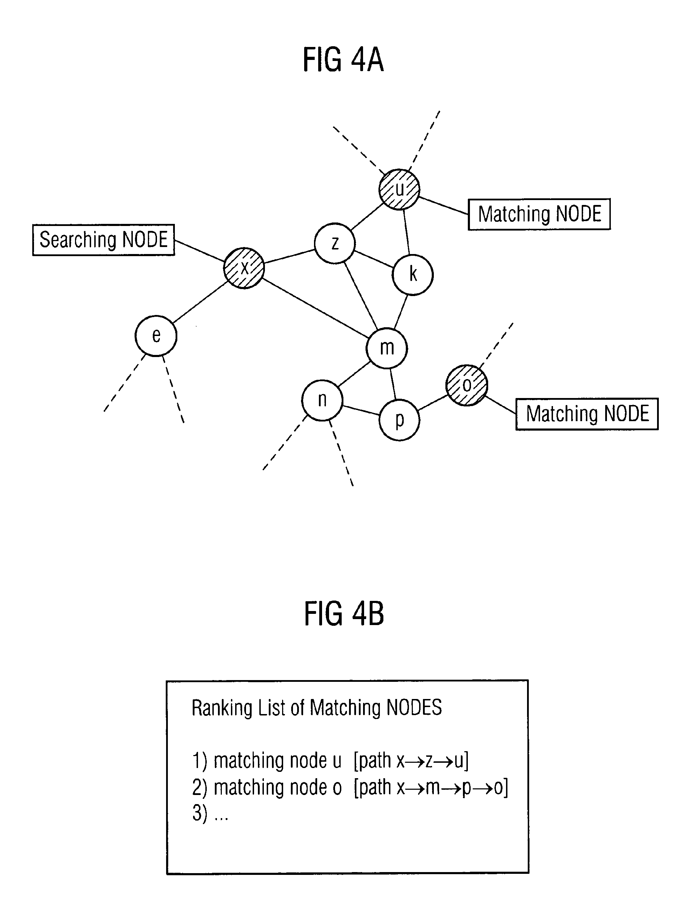

Figure 4B shows an example of a ranking list generated by the method according to the present invention for the relationship network 2 as shown in figure 4A. In this example, a searching node is looking for nodes to comply with a predefined profile. In the given example both node u and node o fulfil the desired profile. Since the calculated relationship network distance d between node x and node u is two, there is only one intermediary node z whereas the calculated relationship distance d between node x and node o is three having two intermediary nodes m, p, node u is ranked higher than matching node o although both fulfil the desired search profile. The ranking list generated by the server 5 is displayed to the searching node, i. e. the ranking list is transferred to the searching node via the data network 3.

In a possible embodiment, the ranking list of matching nodes comprises all intermediary nodes between the searching node and the respective matching node within the relationship network 2 as can be seen in figure 4B.

In the example of figure 4B, a first relationship path between the searching node x and the matching node u is (x, z, o). The second relationship path between the searching node x and the matching node o is (x, m, p, o). The display of the relationship path allows the searching node x to contact the intermediary nodes, either to establish contact to the found matching node or, further, to receive information data indicating whether the found matching node really complies with the searching profile.

Supposed that a person A is working in the communication department of an enterprise, he needs a "Technical Consultant" not a mere "Junior" but an experienced "Senior", "Principal" or "Principal Senior" having at least three years of working experience in "Data Mining" and "Data Warehousing" and having served on related projects at least as "Subproject Manager". In such a scenario, a person A will access a portal service provided by a server 5 for his request and formulate his queries based on expertise constraints. The ranking list returned by the server 5 reveals to person A a person C as the best match with just two handshakes away from the searching person A, e. g. person A knows a person B from an earlier project they both have collaborated within, and person B knows personally person C from a workshop on a project management. In this scenario, a person A can approach person B and ask him/her about his personal work experience with person C, important characteristics and specific traits that may have an impact on having person C in his team, wherein person B acts as personal proxy for the reputation of person C. In case that person B recommends person C to the searching person A, the next step of person A is to ask person B to introduce him to person C, thus acting as a match maker.

As can be seen from the given example, the method according to the present invention is, in particular, suited for an access portal for employees of an enterprise having a data network. In particular, the method according to the present invention makes it possible to find efficiently an expert within the same enterprise.

In a preferred embodiment, the method according to the present invention uses hierarchically organized classification schemes for features or skills of nodes organized in a taxonomic classification scheme. Skills, expertise and experience of an expert or employee are stored in a database. In a preferred embodiment of the method according to the present invention, the matching of node profiles is performed by automatic taxonomic interference. This allows that not only exact matches between profiles are found but also profiles over-fulfilling the requested profile. For instance, if the searched expert has been once a project leader of a small project forming part of an overall project and there is a possible expert which has been even project leader of the overall project, thus over-fulfilling the required profile, this gives a match even when there is no exact match to the required profile. In a taxonomic classification scheme as implemented by the present invention, skills are arranged in hierarchically arranged taxonomies or ontologies. Accordingly, in the given example, each project leader of an overall project fulfils a requirement of a project leader of a partial project within the whole project.

In a preferred embodiment, the taxonomic classification scheme, e. g. hierarchy of criteria, is displayed to the searching node, for instance, with a tree or with a dropdown box.

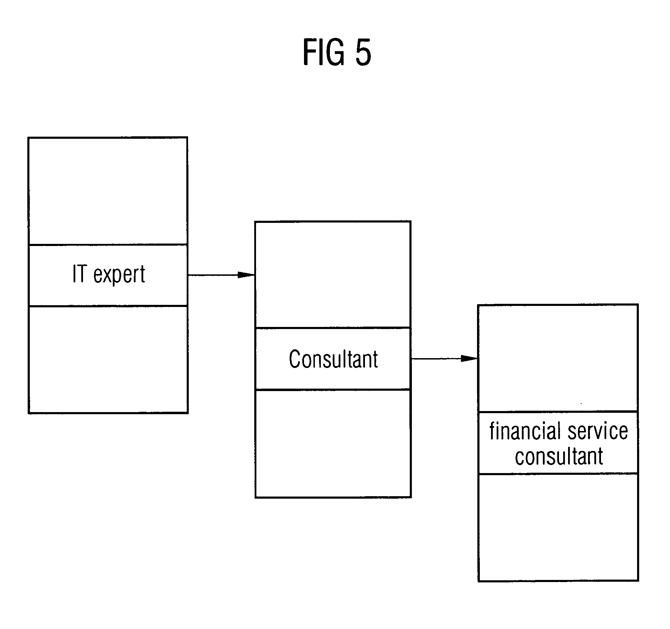

Figure 5 shows an example of dropped down boxes allowing the selection of a criteria using a taxonomic classification scheme. In the given example, the searching person first selects an IT-expert in the first level of the hierarchy and then a consultant in a second level of the hierarchy. Finally, the financial service consultant is selected in a third level of the taxonomic hierarchy. The selection in this manner avoids any ambiguities for the selected criterion.

In one embodiment of the method according to the present invention, a matching degree value is calculated for each matching node during the matching of the transmitted profile and the respective profile of a node within the relationship network 2, wherein the calculated matching degree value indicates the degree of matching between both profiles. The calculation of the matching degree value is performed in step S2.

In a possible embodiment, the method according to the present invention, further, a reputation value is calculated for each matching node of the relationship network 2 depending on a number of neighboring nodes to which the matching node is connected within the relationship network 2 and depending on the reputation values of his neighboring nodes by recursive computation.

In this embodiment, the ranking of the matching node is performed depending also on the calculated reputation value of the matching node. The matching node having a higher reputation value than another matching node is ranked higher in the displayed list.

The method according to the present invention allows to track an expert within an enterprise, e. g. by using the enterprise network, to find connector persons who can link a requesting person looking for another person having the necessary expertise taking into account a personal acquaintanceship between the persons.

In a possible embodiment of the method according to the present invention, it is possible for a user to maintain a curriculum vitae (CV)-like page as contact information including position, department and business unit. This data may be generated automatically. Further, the user can input additional information about himself manually at his client computer. This additional information may comprise his skills and expertise and a list of important projects he has participated in. Moreover, the user can specify the type of projects in a topic-based taxonomy where he would like to participate in.

In a possible embodiment, further data, such as a portrait and further information of the searching node, i. e. address, hobbies etc. may be included, wherein this data is only visible to confirmed contact nodes having a bidirectional direct link to said searching node within the relationship network 2.

Further, the stored data may comprise the user's personal business contacts, i. e. his partners and his team members. By inviting another node or person to become his contact, a unidirectional network link is generated extending from the inviting person within the relationship network 2 to the invited node or person. Upon receiving the message having been added as a contact person the invited person within the relationship network 2 is given the chance to confirm the contact. In this case, the connection between both persons becomes a bidirectional connection. In a preferred embodiment, certain information of a person or node within a relationship network 2, such as personal address information is visible only to confirmed bidirectional contacts within the relationship network 2.

The method according to the present invention allows the user to search for experts in his closer surrounding. A typical inquiry would look like this:
Search for an IT-expert with advanced skills in data warehouse design with at least three years of job-relevant experience and who has participated in business-intelligence projects in the role of a "Junior Project Manager" or above.
The method according to the present invention allows each employee or each member of a relationship network 2 to have a local view of the relationship network 2.

## Claims

1. A method for automatically ranking of nodes within a relationship network which comply with a profile having criteria referring to taxonomic classification schemes,
wherein the method comprises the following steps:
(a) transmitting of a search request including said profile from a searching node of said relationship network via a physical network to a server;
(b) matching the transmitted profile with stored profiles of nodes of said relationship network by said server;
(c) calculating relationship network distances between the matching nodes and the searching node by said server; and
(d) ranking the matching nodes depending on the calculated respective relationship network distances.

2. The method according to claim 1,
wherein matching nodes having a low calculated relationship network distance to the searching node are ranked higher than matching nodes having a high calculated relationship network distance.

3. The method according to claim 1,
wherein the ranked matching nodes are displayed at the searching node according to their ranking order.

4. The method according to claim 1,
wherein the matching of node profiles is performed by automatic taxonomic interference.

5. The method according to claim 1,
wherein a matching degree value is calculated for each matching node during the matching of the transmitted profile and the respective profile of a node of said relationship network,
wherein said calculated matching degree value indicates a degree of matching between both profiles.

6. The method according to claim 5,
wherein the ranking is performed by calculating a ranking function depending on the matching degree value and the relationship network distance for all matching nodes.

7. The method according to claim 1,
wherein a reputation value is calculated for each matching node of said relationship network depending on a number of neighboring nodes to which said matching node is connected within the relationship network and the reputation values of the neighboring nodes.

8. The method according to claim 7,
wherein the ranking of said matching node is performed depending also on the reputation value of said matching node.

9. The method according to claim 1,
wherein a relationship path between a matching node and a searching node in the relationship network is displayed at the searching node.

10. The method according to claim 9,
wherein the relationship path comprises all intermediary nodes between the searching node and the respective matching node within said relationship network.

11. The method according to claim 1,
wherein said relationship network is stored in a first data base connected to said server.

12. The method according to claim 1,
wherein the profiles of all nodes of the relationship network are stored in a second data base connected to the server.

13. The method according to claim 9,
wherein the searching node sends an inquiry to at least one intermediary node of said relationship path to verify the profile of the respective matching node.

14. The method according to claim 9,
wherein the searching node establishes a communication link to the respective matching node via the intermediary nodes of the relationship path.

15. The method according to claim 1,
wherein each node of said relationship network is formed by a computer of a user.

16. The method according to claim 15,
wherein each user computer is connected via said physical network to said server.

17. The method according to claim 1,
wherein said physical network is formed by the Internet.

18. The method according to claim 1,
wherein said profiles comprise minimal criteria to be met by a matching node.

19. The method according to claim 18,
wherein each user is an expert having an expert profile.

20. The method according to claim 1,
wherein said relationship network is formed by a social network or by a separate physical network.

21. A server for automatically ranking nodes within a relationship network which comply with a profile having criteria referring to taxonomic classification schemes,
wherein the server upon reception of a search request from a searching node of said relationship network which includes said profile matches the received profile with stored profiles of other nodes of said relationship network and calculates relationship network distances between the matching nodes and the searching node,
wherein said server ranks the matching nodes depending on the calculated respective relationship network distances.

22. The server according to claim 21,
wherein the search request is received by said server from the searching node via a physical network.

23. The server according to claim 22,
wherein the physical network is the Internet.

24. The server according to claim 21,
wherein each node of the relationship network is formed by a client computer of the user.

25. The server according to claim 21,
wherein the relationship network is stored in a first data base connected to said server.

26. The server according to claim 21,
wherein the profile of all nodes of said relationship network is stored in a second data base connected to said server.

27. A computer system for ranking of nodes within a relationship network which comply with a profile having criteria referring to taxonomic specification schemes comprising:
a data network to which a plurality of clients and at least one server is connected,
wherein the server has a first data base for storing a relationship network indicating relations between said clients and a second data base for storing profiles of the clients,
wherein said server upon reception of a search request including a requested profile from a client via the data network matches the requested profile with profiles of all clients stored in the second data base and calculates a relationship network distance of all matching clients depending on the data stored in said first data base,
wherein said server ranks the matching clients depending on the calculated respective relationship network distance.
